**Europäisches Patentamt**

(19) **European Patent Office**

**Office européen des brevets**

(11) Veröffentlichungsnummer: **0 106 248**
**B1**

(12) # EUROPÄISCHE PATENTSCHRIFT

(45) Veröffentlichungstag der Patentschrift:
01.04.87

(51) Int. Cl.⁴: **C 09 K 21/00,** C 09 D 5/18

(21) Anmeldenummer: **83109835.5**

(22) Anmeldetag: **01.10.83**

(54) **Verfahren zur Herstellung aktivierten Ammoniumpolyphosphats und seine Verwendung.**

(30) Priorität: **16.10.82 DE 3238443**

(43) Veröffentlichungstag der Anmeldung:
**25.04.84 Patentblatt 84/17**

(45) Bekanntmachung des Hinweises auf die Patenterteilung:
**01.04.87 Patentblatt 87/14**

(84) Benannte Vertragsstaaten:
**BE DE FR GB IT NL SE**

(56) Entgegenhaltungen:
**EP - A - 0 003 772**
**FR - A - 2 253 069**
**US - A - 3 562 197**
**US - A - 4 043 987**

(73) Patentinhaber: **HOECHST AKTIENGESELLSCHAFT,
Postfach 80 03 20, D-6230 Frankfurt am Main 80 (DE)**

(72) Erfinder: **Maurer, Alexander, Dr., Kochelseeweg 1,
D-6800 Mannheim 81 (DE)**
Erfinder: **Staendeke, Horst, Dr., Alte Honrather
Strasse 22, D-5204 Lohmar 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Ammoniumpolyphosphat – im folgenden APP genannt – ist ein aufgrund seiner Schwerlöslichkeit in Wasser sowie seines Verhaltens bei höheren Temperaturen bewährter Bestandteil von dämmschichtbildenden Beschichtungsmassen. Es besitzt die Eigenschaft, in der Hitze gasförmige Stoffe, wie z.B. Ammoniak, abzuspalten und gleichzeitig mit verkohlenden organischen Substanzen eine Schutzschicht aus Kohlenstoff und kondensierter Phosphorsäure zu bilden. Diese Schutzschicht hält die Hitze vom zu schützenden brennbaren Gut ab.

Eine derartige Überzugsmasse kann sich beispielsweise gemäss Europäischer Patentschrift 0 003 772 wie folgt zusammensetzen:

a) 15 bis 40 Gew.% eines gegebenenfalls in Gegenwart eines Aldehydlieferanten wärmereaktiven Phenolharzes,

b) 25 bis 45 Gew.% eines Ammoniumsalzes,

c) 10 bis 20 Gew.% eines Kohlehydrates und/oder eines mehrwertigen Alkohols,

d) 15 bis 40 Gew.% einer wärmezersetzlichen organischen Stickstoffverbindung, gegebenenfalls

e) ein Bindemittel aus der Gruppe der wasser- oder lösungsmittellöslichen bzw. in Wasser dispergierbaren Vinylpolymeren, sowie gegebenenfalls

f) Wasser und/oder ein organisches Lösungsmittel in einer solchen Menge, dass die Bestandteile a) – e) im wesentlichen fest bleiben und eine streich- bzw. spachtelbare Masse bilden.

Die Wirksamkeit von dämmschichtbildenden Beschichtungen beruht im wesentlichen darauf, dass sie bei Einwirkung höherer Temperaturen, wie z.B. im Brandfall, aufschäumen und dabei einen feinzelligen Kohlenstoffschaum bilden, der den unter der Beschichtung befindlichen Werkstoff, wie Stahl, Holz oder dergleichen, durch Wärmeisolierung schütz. In diesem Falle unterliegt die Überzugsmasse folgenden Reaktionen:

1. Das Ammoniumsalz als Dehydratisierungsmittel, beispielsweise Ammoniumpolyphosphat, zersetzt sich bei erhöhter Temperatur unter Freisetzung einer Säure und Ammoniak.

2. Die gebildete Säure reagiert mit den Hydroxylgruppen des Kohlehydrates oder mehrwertigen Alkohols unter Bildung eines thermisch labilen Esters.

3. Bei der thermischen Zersetzung des Esters werden Kohlenstoff, Wasser und $CO_2$ gebildet. Durch die gleichzeitige Zersetzung der wärmezersetzlichen organischen Stickstoffverbindung, wie Melamin oder Dicyandiamid, werden zusätzlich nichtbrennbare Gase freigesetzt, die aus den kohlenstoffhaltigen Zersetzungsprodukten des Esters einen Kohlenstoffschaum bilden. Die bei der thermischen Zersetzung des Esters freiwerdende Säure reagiert erneut gemäss Punkt 2 mit den Hydroxylgruppen des mehrwertigen Alkohols.

Gemäss der DE-AS 2 359 699 sind als Ammoniumsalz-Komponente in dämmschichtbildenden Beschichtungen Ammoniumpolyphosphate der allgemeinen Formel

$$H_{(n-m)+2}(NH_4)_m P_n O_3 n+1$$

in welcher n eine ganze Zahl mit einem Durchschnittswert von mindestens 20 m/n mindestens etwa 0,7 und m nicht grösser als n+2 ist, besonders geeignet. Hinsichtlich der Anwendbarkeit der Ammoniumpolyphosphate in dämmschichtbildenden Beschichtungen ist an diese Verbindungen ausser ihrer Schwerlöslichkeit in Wasser die weitere Forderung zu stellen, dass sie oberhalb ihrer Zersetzungstemperatur in möglichst kurzer Zeit unter Ammoniakabspaltung die Säure freisetzen, d.h. eine maximale Zersetzungsrate aufweisen.

Es wurde nunmehr gefunden, dass Ammoniumpolyphosphate in Bezug auf ihre Zersetzungsrate oberhalb der Zersetzungstemperatur durch bestimmte Zusätze ohne Veränderung ihrer sonstigen Eigenschaften aktiviert werden können.

Bei der vorgelegten Erfindung handelt es sich somit um ein aktiviertes Ammoniumpolyphosphat mit erhöhter Zersetzungsrate im Temperaturbereich von 300–600°C, welches erhalten wird durch Umsetzung von Ammoniumpolyphosphat mit Melamin und/oder Dicyandiamid oder deren Derivaten bei 100–200°C.

Gegenstand der Erfindung ist ein Verfahren zur Herstellung eines aktivierten Ammoniumpolyphosphats, welches dadurch gekennzeichnet ist, dass man Ammoniumpolyphosphat mit einer mittleren Kettenlänge von etwa 100 bis 1000 mit einem Aktivator, bestehend aus Melamin und/oder Dicyandiamid oder deren Derivaten, welche bis etwa 220°C thermisch stabil sind, unter ständigem intensivem Mischen bei einer Temperatur von etwa 100–200°C während einer Reaktionszeit von etwa 10 Minuten bis 2 Stunden umsetzt und das erhaltene Produkt abkühlt.

Gemäss einer bevorzugten Ausführungsform des Verfahrens der Erfindung besitzt das Ammoniumpolyphosphat eine Kettenlänge von 200–800.

Weiterhin hat es sich als vorteilhaft erwiesen, Ammoniumpolyphosphat mit dem Aktivator bei einer Temperatur von 150–200°C zu behandeln und die Aktivatormenge auf 1–5 Gew.% zu beschränken.

Weiterhin hat es sich als vorteilhaft erwiesen, Ammoniumpolyphosphat mit dem Aktivator bei einer Temperatur von 150–200°C zu behandeln und die Aktivatormenge auf 1–5 Gew.% zu beschränken.

Im einzelnen ist zum Verfahren der Erfindung folgendes zu bemerken:

Die Zugabe des Aktivators zum Ammoniumpolyphosphat erfolgt am besten in einem Mischaggregat, wie z.B. Kneter, Drehrohr oder Wirbelschichtreaktor. Sie kann zum vorgelegten Ammoniumpolyphosphat oder unmittelbar nach dessen Herstellung erfolgen. Bei der Behandlung des Ammoniumpolyphosphates mit dem Aktivator wird letzterer oberflächlich an den sauren Gruppen des APP fixiert. Hierdurch wird nur wenig Aktivator benötigt. Die benötigten geringen Aktivatormengen führen zu keinen negativen Veränderungen der für den Anwender des APP bedeutungsvollen Produkteigenschaften, mit Ausnahme der erwünschten Steigerung der Zersetzungsrate im Temperaturbereich von 300–600°C. Die erfindungsgemäss vorgeschlagenen Aktivatoren haben den Vorteil, dass sie bei der thermischen Zersetzung des APP keine störenden Zersetzungsprodukte bilden. Die reaktive Bindung der Aktivatorzusätze an die Oberfläche des APP ist beispielsweise daran zu erkennen, dass sich die wasserlöslichen Anteile des aktivierten APP trotz Zugabe des Aktivators nicht erhöhen.

Zur Prüfung des Verhaltens des aktivierten APP bei der thermischen Zersetzung wird das Produkt in einer Thermowaage unter konstanter Aufheizrate thermisch beansprucht und der dabei auftretende Gewichtsverlust als Mass für die Freisetzung der Säure registriert. Dabei zeigt das aktivierte APP eine höhere Zersetzungsrate als nichtaktiviertes APP.

Die nach dem Verfahren der Erfindung hergestellten Ammoniumpolyphosphate sind als Bestandteil von dämmschichtbildenden Beschichtungsmassen vorzüglich geeignet.

Die Erfindung wird anhand der nachfolgenden Beispiele näher erläutert.

Beispiel 1

In einem Kneter mit einem Fassungsvermögen von 10 Liter wurden 5 kg Ammoniumpolyphosphat I mit einer mittleren Kettenlänge $\bar{n}$ von 500 vorgelegt und nach Erwärmen auf 150°C und Zugabe von 140 g feinteiligem Melamin während 30 Minuten intensiv gemischt, wobei eine Temperatur von 150°C aufrecht erhalten wurde. Es wurde ein aktiviertes Ammoniumpolyphosphat A erhalten, dessen Eigenschaften in der Tabelle 1 erläutert sind.

Beispiel 2

Es wurde analog Beispiel 1 verfahren, wobei jedoch das Ammoniumpolyphosphat I auf 200°C erwärmt wurde und die Mischzeit und Abkühlphase auf 150°C 1 Stunde betrug. Es wurde das Produkt B erhalten, dessen Eigenschaften der Tabelle 1 zu entnehmen sind.

Beispiel 3

Es wurde analog Beispiel 1 verfahren, wobei jedoch als Aktivator 50 g Dicyandiamid eingesetzt wurde. Es wurde das Produkt C erhalten, dessen Eigenschaften Tabelle 1 zu entnehmen sind.

Beispiel 4 (Vergleichsbeispiel)

Es wurde gemäss Beispiel 1 der DE-OS 3 038 836 $(NH_4)_2PO_4$, $P_2O_5$ und Ammoniak unter Bildung von Ammoniumpolyphosphat zur Reaktion gebracht. Dem Ausgangsgemisch wurden ausserdem 5 Gew.% Melamin, bezogen auf $P_2O_5$ zugefügt. Nach Beendigung der Reaktion wurde das Produkt D erhalten, dessen Eigenschaften in der Tabelle 1 erläutert sind.

Beispiel 5 (Vergleichsbeispiel)

Es wurde gemäss DE-PS 2 330 174, Beispiel 1, Ammoniumpolyphosphat aus $(NH_4)_2HPO_4$, $P_4O_{10}$ und $NH_3$ bei einer Temperatur von 265°C hergestellt. Das erhaltene Produkt E besass die in Tabelle 1 erläuterten Eigenschaften.

Beispiel 6

Es wurden 5 kg APP II mit einer mittleren Kettenlänge von 270 mit 250 g feinteiligem Melamin unter intensivem Mischen bei einer Temperatur von 200°C im Verlauf von einer Stunde umgesetzt. Nach Abkühlen besass das resultierende Produkt F die in Tabelle 2 erläuterten Eigenschaften. Desgleichen sind in Tabelle 2 die Zersetzungsraten der eingesetzen Ausgangsprodukte, gemessen unter gleichen Bedingungen, vermerkt.

Beispiel 7

Es wurde analog Beispiel 6 verfahren, jedoch wurden nur 50 g Melamin eingesetzt. Die Eigenschaften des erhaltenen Produktes G sind in Tabelle 2 vermerkt.

Beispiel 8

Dieses Beispiel erläutert das Brandverhalten eines mit einer dämmschichtbildenden Beschichtungsmasse überzogenen Gegenstandes, wobei die Beschichtungsmasse ein gemäss Erfindung aktiviertes Ammoniumpolyphosphat enthielt.

a) Herstellung der Beschichtungsmasse:

In ein Rührgefäss, welches mit einer Dissolverscheibe ausgestattet war, wurden nacheinander eingetragen:

250 g Wasser
30 g 10%ige wässrige ®Calgon N-Lösung (Firma J.A. Benckiser GmbH, Ludwigshafen/Rhein)
100 g 3%ige wässrige Lösung von Carboxymethylcellulose
560 g aktiviertes Ammoniumpolyphosphat gemäss Beispiel 6 der Erfindung.
110 g Dicyandiamid
310 g Melamin
310 g Pentaerythrit
120 g Titandioxid
660 g ®Mowilith DC 20 F (Firma Hoechst Aktiengesellschaft, Frankfurt/Main)
550 g Chlorparaffin 50 flüssig (Firma Hoechst Aktiengesellschaft, Frankfurt/Main)
220 g Wasser

Die Viskosität der Intumeszenz-Beschichtungsmasse betrug 52 Pa. s, gemessen bei 25°C.

b) Brandschacht-Prüfung von trockenem Fichtenholz, welches mit vorbeschriebener Beschichtungsmasse beschichtet war:

Auf trockenes Fichtenholz mit den Abmessungen: 100 × 19 × 2 cm wurde in zwei Anstrichen eine Beschichtungsmenge von 506 g/m² aufgetragen.

Beim Brandschacht-Test des beschichteten Fichtenholzes gemäss DIN 4102-B 1 wurde eine maximale Rauchgastemperatur von 118°C ermittelt; die mittlere unverbrannte Restlänge betrug 36 cm, wobei als Restlänge der weder an der Oberfläche noch im Innern verbrannte oder verkohlte Teil des getesteten Gegenstandes gilt. Damit waren die Anforderungen für die Einstufung in die Klasse DIN 4102-B 1 erfüllt.

Ferner wurden die Schaumhöhe und die Schaumstruktur nach erfolgtem Brandschacht-Test beurteilt:

Die Schaumhöhe betrug 12 mm und die Schaumstruktur war feinzellig, fest und ohne Rissbildung.

Tabelle 1

| Produkt | APP I | A | B | C | D | E |
|---|---|---|---|---|---|---|
| Zers.-T. (°C) | 285 | 285 | 275 | 265 | 280 | 265 |
| Zers.-Rate (%) bei | | | | | | |
| 350 °C | 2,7 | 4,1 | 4,4 | 5,0 | 3,0 | 3,2 |
| 400 °C | 6,6 | 12,6 | 12,7 | 10,7 | 6,7 | 7,4 |
| 500 °C | 12,7 | 17,9 | 18,5 | 16,5 | 13,1 | 13,6 |
| 600 °C | 18,4 | 27,8 | 28,8 | 25,8 | 19,2 | 19,8 |
| wasserlösliche Anteile (Masse-%) | 7 | 7 | 5 | 7 | 10 | 19 |
| pH-Wert | 4,6 | 7,7 | 7,8 | 4,6 | 5,7 | 5,6 |
| Viskosität in | | | | | | |
| – Wasser (mPa·s) | 26 | 22 | 13 | 25 | 28 | 270 |
| – ®Desmophen 2200 *) (Pa·s) | 44 | 49 | 48 | 44 | 42 | 68 |
| Anteil an Form II (%) | >90 | >90 | >90 | >90 | >90 | 75 |

*) ®Desmophen 2200 ist ein Polyesterpolyol der Firma Bayer Aktiengesellschaft, Leverkusen.

Tabelle 2

| Produkt | APP II | F | G | Mel* | DCDA* |
|---|---|---|---|---|---|
| Zers.-T. (°C) | 286 | 280 | 265 | 248 | 224 |
| Zers.-Rate (%) bei | | | | | |
| 300 °C | 0,3 | 1,6 | 0,4 | 3,4 | 9,3 |
| 350 °C | 3,8 | 5,4 | 4,0 | 33,6 | 26,8 |
| 400 °C | 7,9 | 15,4 | 10,4 | 71,5 | 40,2 |
| 450 °C | 11,5 | 17,9 | 13,5 | 72,3 | 41,2 |
| 500 °C | 14,3 | 20,3 | 16,3 | 74,0 | 43,7 |
| 550 °C | 17,2 | 22,5 | 18,7 | 76,1 | 47,4 |
| 600 °C | 20,8 | 28,8 | 24,7 | 79,1 | 51,8 |

* Mel = Melamin; DCDA = Dicyandiamid

**Patentansprüche**

1. Verfahren zur Herstellung von aktiviertem Ammoniumpolyphosphat mit erhöhter Zersetzungsrate im Temperaturbereich von 300–600°C, dadurch gekennzeichnet, dass man Ammoniumpolyphosphat mit einer mittleren Kettenlänge von etwa 100 bis 1000 mit einem Aktivator, bestehend aus Melamin und/oder Dicyandiamid oder deren Derivaten, welche bis etwa 220°C thermisch stabil sind, unter ständigem intensivem Mischen bei einer Temperatur von etwa 100–200°C während einer Reaktionszeit von etwa 10 Minuten bis 2 Stunden umsetzt und das erhaltene Produkt abkühlt.

2. Verfahren nach Anspruch 1, dadurch gekennzeichnet, dass die mittlere Kettenlänge des Ammoniumpolyphosphates 200–800 beträgt.

3. Verfahren nach Anspruch 1 oder 2, dadurch gekennzeichnet, dass man Ammoniumpolyphosphat mit dem Aktivator bei einer Temperatur von 150–200°C behandelt, wobei die Aktivatormenge 1–5 Gew.% beträgt.

4. Verwendung des aktivierten Ammoniumpolyphosphates gemäss Anspruch 1 als Bestandteil von dämmschichtbildenden Beschichtungsmassen.

**Revendications**

1. Procédé de préparation de polyphosphate d'ammonium activé présentant un taux de décomposition accru dans la gamme de températures de 300–600°C, caractérisé en ce que l'on fait réagir à une température d'environ 100–200°C pendant une durée d'environ 10 min à 2 h en mélangeant énergiquement en continu du polyphosphate d'ammonium d'une longueur de chaîne moyenne d'environ 100–1000 avec un activeur constitué par la mélamine et/ou le dicyanodiamide ou leurs dérivés thermiquement stables jusqu'à environ 220°C et on refroidit le produit obtenu.

2. Procédé selon la revendication 1, caractérisé en ce que le polyphosphate d'ammonium présente une longueur de chaîne moyenne de 200–800.

3. Procédé selon la revendication 1 ou 2, caractérisé en ce que l'on traite le polyphosphate d'ammonium par l'activeur à une température de 150–200°C, la quantité d'activeur étant de 1–5% en poids.

4. Utilisation du polyphosphate d'ammonium activé selon la revendication 1 comme constituant de masses d'enduction formant des couches isolantes.

**Claims**

1. Process for making activated ammonium polyphosphate undergoing decomposition at an increased rate at temperatures within the range 300 to 600°C, wherein ammonium polyphosphate with a mean chain length of about 100 to 1000 is reacted with continuous thorough agitation at a temperature of about 100 to 200°C and over a period of about 10 minutes to 2 hours, with an activator consisting of melamine or dicyandiamide or their derivatives being thermally stable up to a temperature of about 220°C, and the product so obtained is cooled.

2. Process as claimed in claim 1, wherein the ammonium polyphosphate has a mean chain length of 200 to 800.

3. Process as claimed in claim 1 or 2, wherein the ammonium polyphosphate is treated with 1 to 5 weight % activator at a temperature of 150 to 200°C.

4. Use of the activated ammonium polyphosphate as claimed in claim 1 as a constituent of coating compositions forming heat insulating layers.